# EUROPÄISCHE PATENTSCHRIFT

(11) **EP 2 651 620 B1**
(45) Veröffentlichungstag und Bekanntmachung des Hinweises auf die Patenterteilung: **26.11.2014**
(21) Anmeldenummer: 11794494.2
(22) Anmeldetag: 13.12.2011
(51) Int. Cl.: B29C 47/88

(54) **VORRICHTUNG UND ANLAGE ZUM HERSTELLEN UND KÜHLEN EINER FOLIE**
APPARATUS AND PLANT FOR MANUFACTURING AND COOLING A FOIL
APPAREIL ET INSTALLATION POUR LA FABRICATION ET DE REFROIDISSEMENT D'UN FILM

(30) Priorität: 14.12.2010 DE 102010063010
(43) Veröffentlichungstag der Anmeldung: 23.10.2013
(73) Patentinhaber: Windmöller & Hölscher KG, 49525 Lengerich (DE)
(72) Erfinder: RÜBBELKE, Ingo, 59590 Geseke (DE)
(74) Vertreter: Vogel, Andreas
(86) Internationale Anmeldenummer: PCT/EP2011/072648
(87) Internationale Veröffentlichungsnummer: WO 2012/080276

(56) Entgegenhaltungen:
- EP-A1- 1 616 687
- EP-A1- 1 719 602
- EP-A2- 0 285 368
- EP-A2- 1 982 819
- WO-A1-2006/022391
- WO-A1-2006/039813
- DE-A1- 2 658 518
- DE-A1- 3 610 488
- US-A- 2 632 206
- US-A- 3 959 425
- US-A- 4 254 183
- US-A1- 2008 061 460

## Beschreibung

Die Erfindung betrifft eine Vorrichtung zum Kühlen einer Folie bei der Folienherstellung. Solche Vorrichtungen werden in EP 161 66 87 und WO 2006 039813 offenbart.

Heutige Blasfolienextrusionsanlagen können, sofern ein modernes Profildickenregelungssystem im Einsatz ist, eine maximale Toleranzabweichung der Foliendicke von ca. +/- 4 % über den gesamten Folienumfang erzielen. Trotz dieses im Vergleich zum ungeregelten Betrieb bei 8-10 % Toleranz guten Wertes, reicht die Stellwirkung der bekannten Profildickenregelsysteme nicht aus, um einwandfreie Folienwickel ohne die heute bei nahezu allen Blasfolienanlagen eingesetzte, reversierende Abzugseinheit zu erzielen. Durch die Reversierung der kompletten Abzugs- und Flachlegeeinheit werden die nach der Profildickenregelung verbleibenden Dick- und Dünnstellen der Folienbahn kontinuierlich verlegt, so dass eine nicht gewünschte Kolbenringbildung durch das Aufsummieren der Fehlstellen auf dem Folienwickel vermieden werden kann. Nachteile aus dem heutigen Stand der Technik ergeben sich durch den kostenintensiven und komplexen Aufbau der revesierenden Abzüge, die der Kolbenringbildung entgegenwirken. Die Mehrkosten von ca. 25 % vom Anlagengesamtpreis werden bedingt durch: Höherer Kostenaufwand beim Turmbau, da das hohe Gewicht des reversierenden Abzuges in großer Höhe verbaut werden muss. Komplizierte und teure Mechanik von Reversiergetrieben, Luftwendestangen, Umlenk- und Breitstreckwalzen. Weiterhin wird die nutzbare Kühlstrecke der Produktionshallenhöhe durch den hohen Aufbau des reversierenden Abzugs stark reduziert. Neben den Anlagenkosten ergibt sich durch den komplexen Aufbau ein erschwerter Anfahrvorgang und ein störungsanfälliger Betrieb des reversierenden Abzugssystems, insbesondere sehr dünne und klebrige Folienbahnen haften oft an den Luftwendestangen an und erzeugen so schnell einen Produktionsausfall.

Aufgabe der Erfindung ist es eine Vorrichtung zum Kühlen einer Folie bei der Folienherstellung derart weiterzubilden, dass auf einfache Weise Folien mit einem möglichst geringen Foliendickenunterschied hergestellt werden können.

Die oben genannte Aufgabe wird durch sämtliche Merkmale des Patentanspruches 1 gelöst. In den abhängigen Ansprüchen sind vorteilhafte Weiterbildungen ausgeführt.

Erfindungsgemäß ist vorgesehen, dass Mittel vorgesehen sind, so dass gleichzeitig der Kühlgasvolumenstrom und die Kühlgastemperatur einstellbar sind. Die Mittel sind derart gestaltet, dass der Kühlgasvolumenstrom und die Kühlgastemperatur gleichzeitig eingestellt werden können, um eine Profildickenoptimierung der Folie realisieren zu können. Um die Dicke der Folie, insbesondere des Folienschlauches regeln zu können, wird die extrudierte Kunststoffschmelze, die aus dem Blaskopf entweicht, unterschiedlich über die Kühleinheit erwärmt und/oder gekühlt, wodurch das Dickenprofil der Folie einstellbar ist bzw. beeinflussbar ist. Hierbei wird die Wirkung ausgenutzt, dass bei einem Aufblasen beispielsweise des Folienschlauches aus der Blasfolienextrusionsanlage die wärmeren Bereiche stärker und die kühleren Bereiche weniger stark ausgereckt werden. Das bedeutet, dass eine höher temperierte Luft des Kühlgasvolumenstorms ein dünneres Ausziehen der Folie bewirkt. Parallel umfasst die Erfindung den technischen Vorteil der Kühleinheit, dass neben der Einstellung der Kühlgastemperatur gleichzeitig das Kühlgasvolumen intelligent variiert werden kann, und zwar in Abhängigkeit von der Kühlgastemperatur. Das bedeutet, dass bei einem geringeren Kühlgasvolumenstrom die Folie noch weiter ausgezogen, bzw. verdünnt wird, wodurch eine Stellwirkung beider Parameter, das heißt Kühlgasvolumenstrom und Kühlgastemperatur, um ein vielfaches erhöht werden kann. Folglich ist die Kühleinheit in der Lage, das Dickenprofil der Folie in kürzester Zeit einzustellen. Das gleiche gilt selbstverständlich für eine Kühleinheit, die in einer Flachfolienextrusionsanlage ihren Einsatz findet.

Ebenfalls ist es denkbar, dass Mittel vorgesehen sind, so dass der Kühlgasvolumenstrom in Abhängigkeit von der Kühlgastemperatur oder umgekehrt selbsttätig gesteuert oder geregelt wird. Das bedeutet, dass bei einer Änderung der Kühlgastemperatur gleichzeitig und parallel der Kühlgasvolumenstrom veränderbar ist. Um eine Verdünnung der Folie an einer definierten Stelle zu erzielen, kann beispielsweise die Kühleinheit derart funktionieren, dass neben einer Kühlgastemperaturerhöhung gleichzeitig der Kühlgasvolumenstrom bezogen auf den jeweiligen Abschnitt der Folie verringert wird.

Vorteilhafterweise kann zumindest ein Ventilelement in der Kühleinheit angeordnet sein, wodurch der Kühlgasvolumenstrom veränderbar ist. Das Ventilelement kann beispielsweise eine Klappe sein, die innerhalb der Kühleinheit bewegbar ist, um den Kühlgasvolumenstrom, der in Richtung der Folie aus der Kühleinheit austritt, zu variieren. Innerhalb der Kühleinheit kann gleichzeitig ein Heizelement integriert sein, welches in Abhängigkeit vom Ventilelement die Kühltemperatur verändern kann.

In einer weiteren die Erfindung verbessernden Maßnahme kann zumindest ein Regelelement in der Kühleinheit angeordnet sein, wobei das Ventilelement und ein Heizelement in dem Regelelement integriert sind, um den Kühlgasvolumenstrom und die Kühlgastemperatur gleichzeitig zu steuern und/oder zu regeln. Das Regelelement sorgt somit dafür, dass der Kühlgasvolumenstrom sowie die Kühlgastemperatur gleichzeitig nach definierten Vorgaben eingestellt wird. In einer möglichen Ausführungsform der Erfindung kann das Ventilelement ein verbiegbares Bimetallstellelement sein, durch das mit Änderung der Kühlgastemperatur zusätzlich der Kühlgasvolumenstrom durch Verringerung oder Vergrößerung eines des in der Kühleinheit angeordneten Kühlgaskanalquerschnitts, durch den der Kühlgasvolumenstrom leitbar ist, veränderbar ist. Das Bimetallstellelement ist hierbei mit dem Heizelement derart gekoppelt, dass über die Änderung der Kühlgastemperatur der um das Bimetallstellelement strömende Kühlgasvolumenstrom gleichzeitig dafür sorgt, dass das Bimetallstellelement sich entsprechend verbiegt und/oder einstellt, wodurch der Kühlgasvolumenstrom variiert werden kann. Vorteilhafterweise befindet sich in der Kühleinheit, insbesondere im Regelelement ein Kühlgaskanal mit einem definierten Kühlgaskanalquerschnitt, in dem das verbiegbare Bimetallstellelement angeordnet ist. Wenn sich nun das Bimetallstellelement innerhalb des Kühlgaskanals verbiegt, verändert sich der Kühlgaskanalquerschnitt, wodurch der austretende Kühlgasvolumenstrom veränderbar ist.

Beispielsweise ist es denkbar, dass die Kühleinheit als ein Kühlring ausgebildet ist, der eine Vielzahl an Regelelementen umfangsseitig des Kühlrings aufweist. Somit kann die Kühleinheit umfangseitig eine Vielzahl an Regelelementen aufweisen, wodurch umfangsseitig an jeder Stelle des Folienschlauches die Foliendicke beeinflussbar ist.

Alternativ ist es denkbar, dass die Kühleinheit als ein stabförmiges Kühlelement ausgebildet ist, das eine Vielzahl an Regelelementen aufweist, die linear nebeneinander angeordnet sind. Das stabförmige Kühlelement kann beispielsweise bei einer Flachfolienextrusionsanlage zum Einsatz kommen, um die Foliendicke der Flachfolie zu beeinflussen.

Vorteilhaft kann sein, dass eine Antriebsvorrichtung zur Bewegung der Kühleinheit und/oder der Regelelemente vorgesehen ist, insbesondere dass die Antriebsvorrichtung eine mechanische Antriebsvorrichtung ist. Beispielsweise kann die Kühleinheit und/oder die Regelelemente translatorisch entlang der Folie bewegbar sein und/oder hin und her bewegbar sein und/oder reversierbar sein. Ebenfalls ist es denkbar, dass die Kühleinheit und/oder die Regelelemente um den Folienschlauch bewegbar sind und/oder hin und her bewegbar sind und/oder reversierbar sind. In einer möglichen Ausführungsform der Erfindung kann durch die Antriebsvorrichtung der Kühlring und/oder die Regelemente um eine Drehachse zwischen 0 und 360°, vorzugsweise zwischen 5 und 45° bewegbar sein. Das bedeutet, dass die Antriebsvorrichtung zum Einen die gesamte Kühleinrichtung samt der Regelelemente bewegen kann. Ebenfalls ist es denkbar, dass die Antriebsvorrichtung lediglich die Regelelemente innerhalb der Kühleinheit bewegen kann. Ein Vorteil des Einsatzes der Antriebsvorrichtung ist, dass die aus dem Stand der Technik nicht gewünscht Kolbenringbildung wirkungsvoll verhindert werden kann. Über die Bewegung der Kühleinheit und/oder der Regelelemente kann eine künstliche Verschiebung der Dick- und Dünnstellen bewirkt werden, so dass eine Art "Verwischung" der Dick- und Dünnstellen an der Folie erreichbar ist. Schlussendlich kommt es nicht mehr zu einer Aufsummierung der Fehlstellen auf einer definierten Stelle auf dem Folienwickler sondern es entsteht eine Art Vergleichmäßigung der Fehlstellen am Folienwickler. Im günstigsten Fall kann auf eine kostenintensive reversierende Abzugseinheit nahezu verzichtet werden, die gemäß des Standes der Technik eine Kolbenringbildung am Folienwickler entgegenwirkt. Ein weiterer wichtiger Aspekt der Antriebsvorrichtung kann sein, dass die Kühleinheit und/oder die Regelelemente exakt auf die Stellen bzw. auf die Position eingestellt werden können, wo die Folie aufgrund ihres Dickenprofils zu beeinflussen ist, insbesondere das Dickenprofil an der oder an den definierten Stellen vergrößert oder verringert werden muss.

Die Wirkung und Aufgabe der soeben genannten Antriebsvorrichtung kann ebenfalls durch eine elektronische Ansteuerung für die Regelelemente bewirkt werden. Hierbei ist es denkbar, dass eine kontinuierlich, veränderte elektronische Ansteuerung für die Regelelemente vorgesehen ist, wodurch eine elektronische Reversierung der Regelelemente durchführbar ist. Erfindungsgemäß kann die elektronische Ansteuerung die Regelelemente mit einer variablen Verstellgeschwindigkeit und/oder mit einer variablen Stellgröße und/oder variablen Geschwindigkeit und/oder konstanten Geschwindigkeit nach einem Zufallsgeneratorprinzip ansteuern. Der Vorteil der elektronischen Ansteuerung ist, dass eine aufwendige mechanische Antriebsvorrichtung nicht notwendig ist, um gezielt jede definierte Stelle an der Folie hinsichtlich ihrer Profildicke zu beeinflussen. Ebenfalls kann vorgesehen sein, dass die Antriebsvorrichtung mit einer elektronischen Ansteuerung kombinierbar ist.

Zudem ist es denkbar, dass die elektronische Ansteuerung, insbesondere auf das best möglich aus regelbare Foliendickenprofil, einen Korrekturwert berücksichtigt, um einzelne Regelelemente oder Gruppen von Regelelementen anzusteuern, wodurch eine künstliche Dickenstellenbildung und/oder Dünnstellenbildung an der Folie erzeugbar ist. Der Korrekturwert ist einstellbar, wodurch künstliche Dickstellen oder Dünnstellen zur Vermeidung von Kolbenringbildungen an der Folie erzeugbar sind. Der einstellbare Korrekturwert kann beliebig in seinem Stellwert und seiner Einschaltdauer variiert werden. Ebenfalls kann der Stellgrößen- Schaltzeit- und Ortsvariable-Korrekturwert sich in einem Regelkreislauf mit einer kontinuierlichen Foliendickenmessungseinheit selbstständig auf ein bestmögliches Foliendickenprofil hin optimieren.

In einer weiteren die Erfindung verbessernden Maßnahme kann das Ventilelement aus mindestens zwei Bimetallstellelementen ausgebildet sein, wobei insbesondere jedes Bimetallstellelement ein freies, bewegliches Ende aufweist, wobei die freien Enden zueinander benachbart angeordnet sind und jedes Bimetallstellelement jeweils einen unbeweglichen Befestigungsbereich aufweist, wobei die unbeweglichen Befestigungsbereiche zueinander abgewandt sind. Die Bimetallstellelemente befinden sich in dem Kühlgaskanal. Überraschenderweise hat sich gezeigt, dass hierdurch schädliche Verwirbelungseffekte innerhalb des Kühlgaskanals und/oder beim Austritt des Kühlgasvolumenstroms in Richtung Folie vermieden werden können. Die Bimetallstellelemente können zumindest teilweise überlappend zueinander angeordnet sein. Je nach Temperatur des Heizelementes verbiegen sich die beiden Bimetallstellelemente entsprechend, wodurch gleichzeitig der Kühlgasvolumenstrom und die Kühlgastemperatur über das Regelelement einstellbar ist.

In einer weiteren vorteilhaften Ausgestaltung kann das Bimetallstellelement von einer flexiblen Haut überzogen sein. Die flexible Haut kann beispielsweise eine dünne Folie sein, die das Bimetallstellelement umgibt, wodurch ebenfalls Verwirbelungseffekte innerhalb des Kühlgaskanals und/oder beim Austritt des Kühlgasvolumenstroms in Richtung Folie vermieden werden können.

In den abhängigen Ansprüchen sind vorteilhafte Ausführungsformen beschrieben.

Erfindungsgemäß ist eine Folienextrusionsanlage zur Herstellung einer Folie mit folgenden Merkmalen vorgesehen:
einem Blaskopf, der einen Austritt der Folie bewirkt,
einer Kühleinheit zur Kühlung der aus dem Blaskopf austretenden Folie,
einer Dickenmessungseinheit zur Messung der Foliendicke,
einer Elektronikeinheit, die insbesondere als Steuer- und/oder Regelungseinheit ausgebildet ist, wobei die Elektronikeinheit in Signalverbindung mit der Kühleinheit und der Dickenmessungseinheit steht, um die Foliendicke zu beeinflussen,
wobei aus der Kühleinheit ein Kühlgasvolumenstrom mit einer Kühlgastemperatur derart ausströmbar ist, dass die Folie durch den Kühlgasvolumenstrom anströmbar ist. Erfindungsgemäß sind Mittel vorgesehen, sodass gleichzeitig der Kühlgasvolumenstrom und die Kühlgastemperatur einstellbar ist.

In einer vorteilhaften Ausführungsform der Erfindung kann die Kühleinheit am Blaskopf integriert sein.

Zudem ist es denkbar, dass die Folienextrusionsanlage als Blasfolienextrusionsanlage ausgebildet ist, insbesondere dass die Folienextrusionsanlage als eine vertikal abwärts arbeitende Blasfolienextrusionsanlage mit Wasserkühlung ausgebildet ist.

Alternativ kann die Folienextrusionsanlage als Flachfolienextrusionsanlage ausgebildet sein.

Die Erfindung nimmt Bezug auf eine gezielte Kombination von Regelprinzipien, wie:
A) Regelung der Kühlgasvolumenstrommenge
   Die Kühlgasvolumenstrommenge kann in mehreren Segmenten durch mechanische hervorgerufene und einstellbare Querschnittsverengungen der einzelnen Kühlgaskanäle der Regelelemente geregelt werden. Ebenfalls kann über eine Vielzahl von Ventilelementen der Kühlgasvolumenstrom geregelt werden. Die Folge: Kleinerer Kühlgasvolumenstrom bewirkt lokal geringere Kühlwirkung, so dass die Schmelze der Folie an diesen Stellen länger und entsprechend dünner ausgeformt werden kann.
B) Regelung der Kühlgastemperatur
   Die segmentweise Erhöhung der Kühlgastemperatur: Folge analog zu A, da höhere Kühlgastemperatur ebenfalls für eine lokal geringere Kühlwirkung nach sich zieht.

Die Kombination der aufgeführten Prinzipien kann durch das Zusammenschalten einer Wärmequelle (Heizelement) mit einem Ventilelement, zum Beispiel mit einen Bimetallstreifen erfolgen. Dabei hat die Wärmequelle (z.B. eine Heizpatrone) zum einen die Aufgabe, den Kühlgasstrom auf eine höhere Temperatur zu bringen (Regeleinfluss B) und zum anderen die Verformung des oberhalb der Wärmequelle angeordneten Bimetalls hervor zu rufen. Durch die Verformung des Bimetalls kann parallel zur Temperatureinbringung eine Verengung des Kühlgasdurchtrittsquerschnittes innerhalb des Kühlgasstandes für eine Reduzierung des Kühlgasvolumenstromes eingestellt werden (Regeleinfluss A), so dass sich eine im Vergleich zum Stand der Technik erheblich vergrößerte Stellwirkung der Regelsegmente ergibt. Aufgrund der erhöhten Stellwirkung des neuen Regelsystems kann erfindungsgemäß auf den Einsatz eines kosten- und raumintensiven reversierenden Abzugssystems verzichtet werden.

Weitere Vorteile, Merkmale und Einzelheiten ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine rein schematische Ansicht einer Folienextrusionsanlage mit einer erfindungsgemäßen Kühleinheit,
- Fig. 2: eine vergrößerte Ansicht der Kühleinheit gemäß Figur 1,
- Fig. 3: eine schematische Draufsicht einer Kühleinheit,
- Fig. 4: ein weiteres Ausführungsbeispiel einer Kühleinheit,
- Fig. 5: ein noch weiteres Ausführungsbeispiel einer Kühleinheit,
- Fig. 6: eine Kühleinheit, die in einer Blasfolienextrusionsanlage mit Wasserkühlung eingesetzt ist und
- Fig. 7: eine Kühleinheit, die in einer Flachfolienextrusionsanlage zum Einsatz kommt.

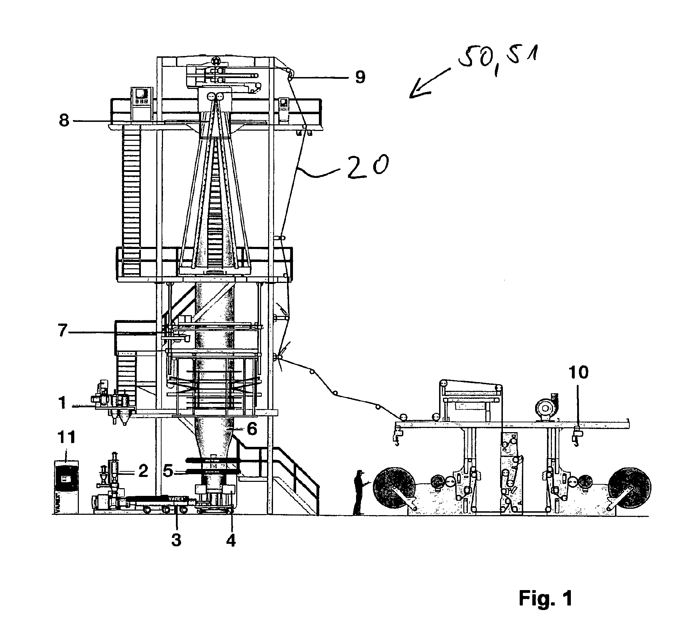

In Figur 1 ist eine Folienextrusionsanlage 50 zur Herstellung einer Folie 20 dargestellt. Bei der Folienextrusionsanlage 50 handelt es sich um eine Blasfolienextrusionsanlage 51, die mit einem Blaskopf 4 ausgestattet ist, der einen Austritt der Folie 20 bewirkt. Zudem ist eine Kühleinheit 5 zur Kühlung der aus dem Blaskopf 4 austretenden Folie 20 vorgesehen. Bei der Folie 20 handelt es sich im vorliegenden Ausführungsbeispiel um einen Folienschlauch 20. Beabstandet zum Blaskopf 4 und der Kühleinrichtung 5 ist eine Blasendurchmesserregelung 6 vorgesehen, die den Durchmesser des Folienschlauches 20 überprüft. Oberhalb der Blasendurchmesserregelung 6 ist eine Foliendickenmessung 7 angeordnet, die während der Herstellung der Folie 20 die Foliendicke am gesamten Umfang des Folienschlauches 20 überprüft. Am oberen Bereich der Blasfolienextrusionsanlage 51 kann eine reversierende Abzugseinheit 8 angeordnet sein. Darüber hinaus ist eine Breitenmessung/-Regelung 9 vorgesehen. Im Bereich des Folienwicklers 10 erfolgt eine Aufwicklung des Folienschlauches 20. Im vorliegenden Ausführungsbeispiel erfolgt die Foliendickenmessung kapazitiv.

Zudem verfügt die Blasfolienextrusionsanlage 51 über einen Saugförderer 1 für das Kunststoffgranulat. Ferner ist eine gravimetrische Durchsatzregelung 2 vorgesehen, die eine Materialmessung des Kunststoffgranulats durchführt, welches in einen Extruder 3 befördert wird. Das erhitzte Kunststoffgranulat verlässt den Blaskopf 4 über einen definierten Spalt, wobei der Folienschlauch 20 aufgeblasen wird und mit Hilfe der Kühleinheit 5 möglichst genau gekühlt werden muss, um eine entsprechende Wanddicke bzw. Profildicke des Folienschlauches 20 zu erzielen.

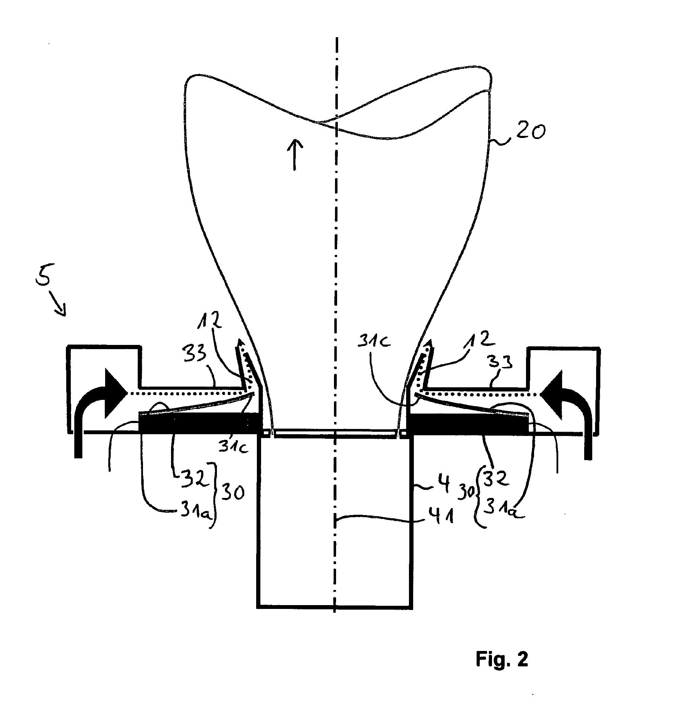

Zudem ist eine Elektronikeinheit 11 vorgesehen, die mit sämtlichen Bauteilen anfangend vom Bezugszeichen 1 bis 10 in Daten- bzw. Signalverbindung stehen kann. Gemäß Figur 2 ist die Kühleinheit 5 mit dem Folienschlauch 20 gezeigt. Die Kühleinheit 5 weist mehrere Regelelemente 30 auf, mit denen ein Kühlgasvolumenstrom 12 und gleichzeitig die Kühlgastemperatur eingestellt werden kann. Hierbei umfasst das Regelelement 30 ein Ventilelement 31 sowie ein Heizelement 32. Das Ventilelement 31 ist mit dem Heizelement 32 gekoppelt. Im vorliegenden Ausführungsbeispiel ist das Ventilelement 31 ein Bimetallstellelement 31a, welches temperaturempfindlich ist und aufgrund einer sich verändernden Kühlgastemperatur bzw. einer veränderten Temperatur des Heizelementes 32 sich verformen kann, wodurch der Kühlgaskanal 33 durch das Bimetallstellelement 31a in seinem Querschnitt verändert werden kann. Das bedeutet, dass aufgrund der sich ändernden Temperatur innerhalb des Kühlgaskanals 33 das freie Ende 31c des Bimetallstellelements 31a in seiner Position sich verändern kann, so dass der Querschnitt, durch den der Kühlgasvolumenstrom 12 nach außen in Richtung Folie 20 tritt, veränderbar ist.

Die Kühleinheit 5 kann derart eingestellt sein, dass mit erhöhter Temperatur der Kühlgasvolumenstrom 12 reduziert wird, da der Kühlgaskanalquerschnitt 33 aufgrund des Bimetallstellelements 31 a verringert wird. Aufgrund des geringeren Kühlgasvolumenstroms 12, welches auf eine definierte Stelle des Folienschlauches 20 trifft sowie aufgrund der erhöhten Kühlgastemperatur liegt an dieser definierten Stelle der Folie 20 bzw. des Folienschlauches 20 eine geringere Kühlwirkung vor, so dass die Schmelze des Folienschlauches 20 an dieser Stelle länger und entsprechend dünner ausgeführt werden kann. Somit wird der Folienschlauch 20 an dieser Stelle noch weiter ausgezogen und folglich erfolgt eine segmentweise Verdünnung der Foliendicke. Eine Erhöhung der Foliendicke erfolgt durch eine Erhöhung des Kühlgasvolumenstroms 12 und einer Erniedrigung der Kühlgastemperatur.

Wie in Figur 2 gezeigt ist befindet sich der Blaskopf 4 unmittelbar unterhalb der Kühleinheit 5. Ebenfalls ist es denkbar, dass die Kühleinheit 5 beabstandet zum Blaskopf 4 angeordnet ist. Das Heizelement 32 ist im vorliegenden Fall eine Heizpatrone.

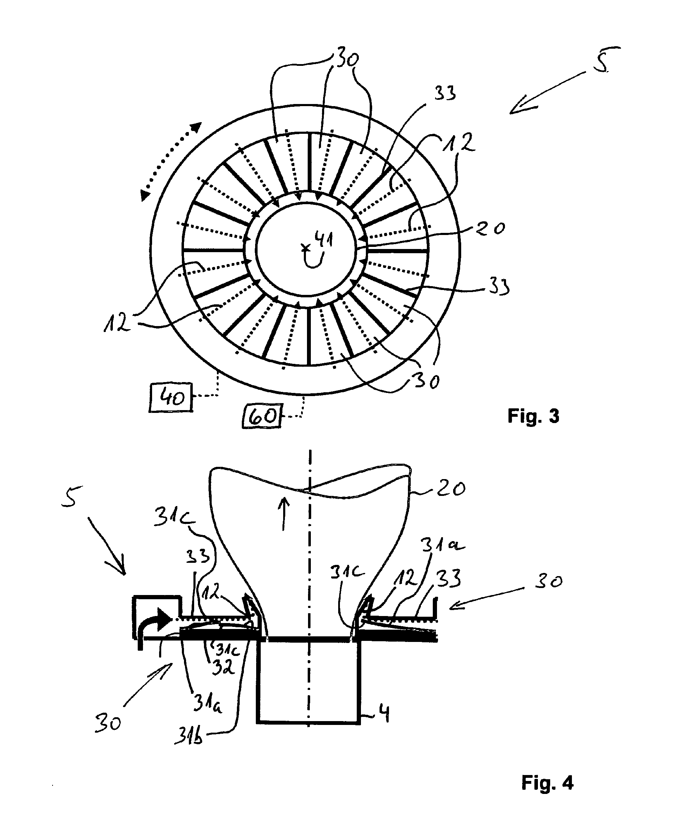

Figur 3 zeigt besonders deutlich, dass die Kühleinheit 5 ein Kühlring 5 sein kann, der aus einer Vielzahl an Regelelementen 30 sich zusammensetzen kann, wobei jedes Regelelement 30 den prinzipiellen Aufbau aufweist, der in Figur 2 gezeigt ist. Das bedeutet, dass jedes Regelelement 30 ein Heizelement 32 mit einem daran gekoppelten Bimetallstellelement 31a ausgebildet sein kann. Der Folienschlauch 20 kann umfangseitig von allen Stellen über den Kühlgasvolumenstrom 12 angeströmt werden, wodurch die Dicke der Folie 20 beeinflusst werden kann. Zudem ist es denkbar, dass eine Antriebsvorrichtung 40 vorgesehen ist, die die Kühleinheit 5 um die Drehachse 41 bewegen kann. Ebenfalls ist es denkbar, dass die Antriebsvorrichtung 40 lediglich die Regelelemente 30 um die Achse 41 bewegen kann. Hierdurch wird bewirkt, dass jede Stelle des Folienschlauches 20 zuverlässig durch den Kühlgasvolumenstrom 12 beströmbar ist, wodurch eine zuverlässige Beeinflussung der Foliendicke erzielt werden kann.

Alternativ ist es denkbar, dass eine elektronische Ansteuerung 60 dafür sorgt, dass individuell jedes Regelelement 30 oder Gruppen von Regelelementen 30 angesteuert werden. Sowohl die Antriebsvorrichtung 40 als auch die elektronische Ansteuerung 60 bewirken, dass eine künstliche Dickenstellenbildung und/oder Dünnenstellenbildung an dem Folienschlauch 20 erzeugbar ist. Hierdurch wird verhindert, dass eine ungewollte Kolbenringbildung auf dem Folienwickel 10 entsteht, welches ein großer Nachteil gemäß des Standes der Technik ist. In der Regel wird gemäß des Standes der Technik eine Kolbenringbildung durch eine kostenintensive reversierende Abzugseinheit 8 verhindert.

In Figur 4 ist ein weiteres Ausführungsbeispiel einer Kühleinheit 5 dargestellt, welches ebenfalls aus einer Vielzahl an Regelelementen 30 besteht, die umfangseitig um den Folienschlauch 20 angeordnet sind. Die Funktionsweise der Kühleinheit 5 entspricht im Wesentlichen der Kühleinheit 5 aus Figur 2. Ein wesentlicher Unterschied ist jedoch, dass gemäß Figur 4 das Ventilelement 31 aus zwei Bimetallstellelementen 31a, 31b ausgebildet ist. Jedes Bimetallstellelement 31a, 31b weist ein freies, bewegliches Ende 31c auf. Die beiden freien Enden 31c sind zueinander benachbart angeordnet. Jedes Bimetallstellelement 31a, 31 b weist jeweils einen unbeweglichen Befestigungsbereich auf, wobei die unbeweglichen Befestigungsbereiche zueinander abgewandt sind. Es hat sich gezeigt, dass durch den Einsatz dieser zwei Bimetallstellelement 31a, 31b, die sich zumindest teilweise überlappen können, Verwirbelungseffekte innerhalb des Kühlgaskanals 33 und/oder beim Austritt des Kühlgasvolumenstroms 12 in Richtung Folie 20 reduziert bzw. vermieden werden können. In Figur 4 ist lediglich das linke Regelelement 30 mit den beiden Bimetallstellelementen 31a, 31b ausgeführt. Selbstverständlich sind sämtliche Regelelemente 30, die umfangseitig um die Folie 20 angeordnet sind, jeweils mit diesen beiden Bimetallstellelementen 31a, 31 b ausführbar. Das rechte Regelelement 30 ist lediglich aus exemplarischen Gründen mit dem Ausführungsbeispiel der Figur 2 gezeigt.

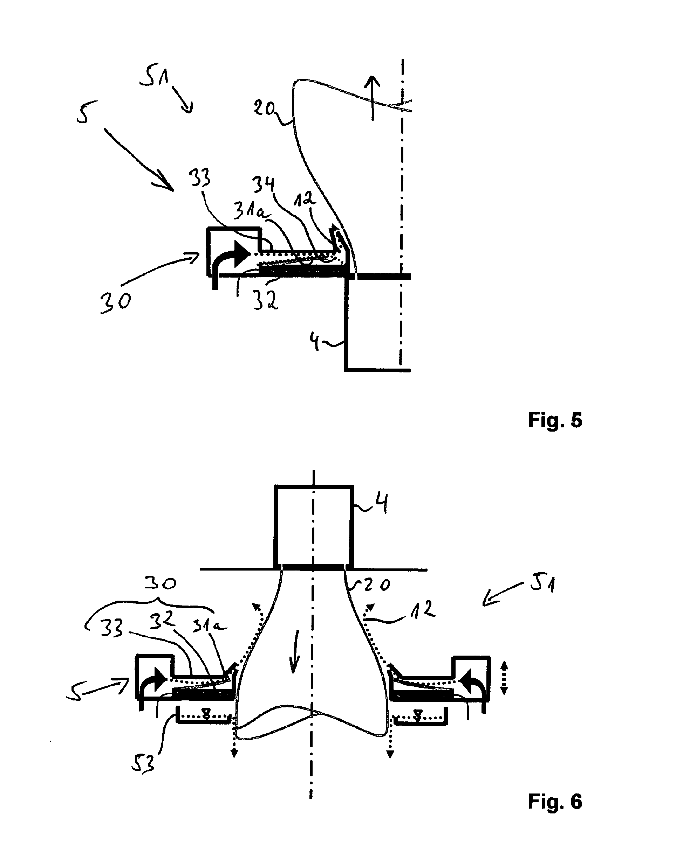

In Figur 5 ist ein weiteres Ausführungsbeispiel gezeigt, bei dem das Bimetallstellelement 31a mit einer flexiblen Folie 34 umgeben ist. Die Funktionsweise dieses Regelelementes 30 entspricht im Wesentlichen der Funktionsweise aus Figur 2. Der Einsatz der flexiblen Folie 34 bewirkt, dass wie auch in Figur 4 Verwirbelungseffekte vermieden bzw. reduziert werden können.

In Figur 6 ist die erfindungsgemäße Kühleinheit 5 in einer vertikal abwärts arbeitenden Blasfolienextrusionsanlage 51 mit Wasserkühlung 53 eingesetzt. Wie in Figur 6 gezeigt ist, erfolgt die Kühlung 53 des Folienschlauches 20 im Gegenstrom, da die wassergekühlte Blasfolie 20 von oben aus dem Blaskopf 4 nach unten austritt. Die Anströmung des Kühlgasvolumenstroms 12 im Gegenstrom hat überraschenderweise gezeigt, dass geringe Verwirbelungen entstehen, insbesondere im Bereich der Kühlwasseroberfläche, sodass eine optimale Folienoptik erzielbar ist.

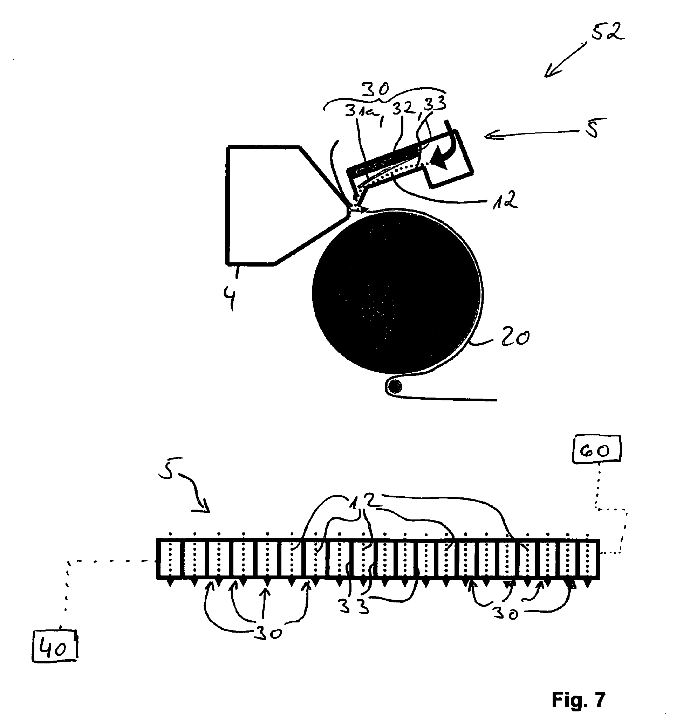

In Figur 7 ist die Kühleinheit 5 als stabförmiges Kühlelement 5 gezeigt, das aus einer Vielzahl an Regelelementen 30 ausgeführt ist, die linear nebeneinander angeordnet sind. Die Kühleinheit 5 ist hierbei in einer Flachfolienextrusionsanlage 52 eingesetzt, wobei die Funktionsweise des Regelelementes 30 zur Beeinflussung der Folie 20 den Ausführungen gemäß Figur 2 entspricht. Der einzige Unterschied ist, dass in Figur 7 die Folie 20 eine Flachfolie 20 ist. Zudem ist es denkbar, dass die Kühleinheit 5 gemäß Figur 7 und/oder ihre Regelelemente 30 über eine nicht explizit dargestellte Antriebsvorrichtung bewegt werden können, um wie in Figur 3 jegliche Positionen der Folie 20 hinsichtlich der Profildicke beeinflussen zu können. Die Bewegung der Kühleinheit 5 bzw. der Regelelemente 30 erfolgt gemäß Figur 7 in translatorischer Richtung.

Selbstverständlich sind die Ausführungsbeispiele gemäß Figur 2 bis Figur 7 mit einer Elektronikeinheit 11 in Signalverbindung setzbar, wie es in Figur 1 exemplarisch gezeigt ist. Auch eine Flachfolienextrusionsanlage 52 gemäß Figur 7 oder eine vertikal abwärts arbeitende Blasfolienextrusionsanlage 51 gemäß Figur 6 können mit folgenden Apparaturen ausgestattet sein:
Einer Blasendurchmesserregelung, Foliendickenmessung, reversierenden Abzugseinheit, Breitenmessung/-Regelung, Folienwickler etc.

### Bezugszeichenliste

- 1: Saugförderung für Granulat
- 2: Gravimetrische Durchsatzregelung, Materialmessung des Kunststoffgranulats
- 3: Extruder
- 4: Blaskopf
- 5: Kühleinheit, Kühlring mit Profildickenregelung
- 6: Blasendurchmesserregelung
- 7: Foliendickenmessung
- 8: reversierende Abzugseinheit
- 9: Breitenmessung/-Regelung
- 10: Folienwickler
- 11: Elektronikeinheit, Automatisierungsmodul
- 12: Kühlgasvolumenstrom

- 20: Folie, Folienschlauch, Flachfolie

- 30: Regelelement
- 31: Ventilelement
- 31a: Bimetallstellelement
- 31b: Bimetallstellelement
- 31c: freies Ende
- 32: Heizelement
- 33: Kühlgaskanal, Kühlgaskanalquerschnitt
- 34: flexible Haut, Folie

- 40: Antriebsvorrichtung
- 41: Drehachse

- 50: Folienextrusionsanlage
- 51: Blasfolienextrusionsanlage
- 52: Flachfolienextrusionsanlage
- 53: Wasserkühlung

- 60: elektrische Ansteuerung

## Patentansprüche

1. Vorrichtung zum Kühlen einer Folie (20) für eine Folienextrusionsanlage (50), mit einer Kühleinheit (5), aus der ein Kühlgasvolumenstrom (12) mit einer Kühlgastemperatur derart ausströmbar ist, dass die Folie (20) durch den Kühlgasvolumenstrom (12) anströmbar ist,
wobei Mittel vorgesehen sind, so dass gleichzeitig der Kühlgasvolumenstrom (12) und die Kühlgastemperatur einstellbar ist,
**dadurch gekennzeichnet,**
**dass** zumindest ein Ventilelement (31) in der Kühleinheit (5) angeordnet ist, wodurch der Kühlgasvolumenstrom (12) veränderbar ist,
und **dass** das Ventilelement (31) ein verbiegbares Bimetallstellelement (31 a, 31 b) ist, durch das mit Änderung der Kühlgastemperatur zusätzlich der Kühlgasvolumenstrom (12) durch Verringerung oder Vergrößerung eines des in der Kühleinheit (5) angeordneten Kühlgaskanalquerschnitts (33), durch den der Kühlgasvolumenstrom (12) leitbar ist, veränderbar ist,
wobei in der Kühleinheit (5) ein Heizelement (32) integriert ist, und wobei das Bimetallstellelement (31a, 31b) derart mit dem Heizelement (32) gekoppelt ist, dass über die Änderung der Kühlgastemperatur der um das Bimetallstellelement strömende Kühlgasvolumenstrom (12) gleichzeitig dafür sorgt, dass das Bimetallstellelement (31 a, 31 b) sich entsprechend verbiegt und/oder einstellt, wodurch der Kühlgasvolumenstrom (12) variiert werden kann.

2. Vorrichtung nach Anspruch 1,
**dadurch gekennzeichnet,**
**dass** Mittel vorgesehen sind, so dass der Kühlgasvolumenstrom (12) in Abhängigkeit von der Kühlgastemperatur oder umgekehrt selbsttätig gesteuert oder geregelt wird.

3. Vorrichtung nach Anspruch 1 oder 2,
**dadurch gekennzeichnet,**
**dass** zumindest ein Regelelement (30) in der Kühleinheit (5) angeordnet ist, wobei das Ventilelement (31) und ein Heizelement (32) in dem Regelelement (30) integriert sind, um den Kühlgasvolumenstrom (12) und die Kühlgastemperatur gleichzeitig zu steuern und/oder zu regeln.

4. Vorrichtung nach einem der vorhergehenden Ansprüche,
**dadurch gekennzeichnet,**
**dass** die Kühleinheit (5) als ein Kühlring (5) ausgebildet ist, der eine Vielzahl an Regelelementen (30) umfangsseitig des Kühlrings (5) aufweist, oder
**dass** die Kühleinheit (5) als ein stabförmiges Kühlelement (5) ausgebildet ist, das eine Vielzahl an Regelelementen (30) aufweist, die linear nebeneinander angeordnet sind.

5. Vorrichtung nach Anspruch 3 oder 4,
**dadurch gekennzeichnet,**
**dass** eine Antriebsvorrichtung (40) zur Bewegung der Kühleinheit (5) und/oder der Regelelemente (30) vorgesehen ist, insbesondere dass die Antriebsvorrichtung (40) eine mechanische Antriebsvorrichtung (40) ist.

6. Vorrichtung nach Anspruch 5,
**dadurch gekennzeichnet,**
**dass** die Kühleinheit (5) und/oder die Regelelemente (30) translatorisch entlang der Folie (20) bewegbar ist/sind und/oder hin und her bewegbar ist/sind und/oder reversierbar ist/sind, wobei insbesondere die Kühleinheit (5) und/oder die Regelelemente (30) um den Folienschlauch (20) bewegbar ist/sind und/oder hin und her bewegbar ist/sind und/oder reversierbar ist/sind, und wobei insbesondere durch die Antriebsvorrichtung (40) der Kühlring (5) und/oder die Regelemente (30) um eine Drehachse (41) zwischen 0 und 360°, vorzugsweise zwischen 5 und 45° bewegbar ist/sind.

7. Vorrichtung nach Anspruch 3 oder 4,
**dadurch gekennzeichnet,**
**dass** eine kontinuierlich, veränderte elektronische Ansteuerung (60) für die Regelelemente (30) vorgesehen ist, wodurch eine elektronische Reversierung der Regelelemente (30) durchführbar ist.

8. Vorrichtung nach Anspruch 7,
**dadurch gekennzeichnet,**
**dass** die elektronische Ansteuerung (60) die Regelelemente (30) mit einer variablen Verstellgeschwindigkeit und/oder mit einer variablen Stellgröße und/oder variablen Geschwindigkeit und/oder konstanten Geschwindigkeit nach einem Zufallsgeneratorprinzip ansteuert, wobei insbesondere die elektronische Ansteuerung (60) einen Korrekturwert berücksichtigt, um einzelne Regelelemente (30) oder Gruppen von Regelelementen (30) anzusteuern, wodurch eine künstliche Dickenstellenbildung und/oder Dünnstellenbildung an der Folie (20) erzeugbar ist.

9. Vorrichtung nach Anspruch 5 oder 7,
**dadurch gekennzeichnet,**
**dass** die elektronische Ansteuerung (60) oder die Antriebsvorrichtung (40) mit einer Dickenmessungseinheit (7) in Signalverbindung steht.

10. Vorrichtung nach einem der vorhergehenden Ansprüche,
**dadurch gekennzeichnet,**
**dass** das Ventilelement (31) aus mindestens zwei Bimetallstellelementen (31a, 31 b) ausgebildet ist,
wobei insbesondere jedes Bimetallstellelement (31a, 31b) ein freies, bewegliches Ende (31 c) aufweist, wobei die freien Enden (31c) zueinander benachbart angeordnet sind und jedes Bimetallstellelement (31a, 31b) jeweils einen unbeweglichen Befestigungsbereich aufweist, wobei die unbeweglichen Befestigungsbereiche zueinander abgewandt sind.

11. Vorrichtung nach Anspruch 1 oder 10,
**dadurch gekennzeichnet,**
**dass** das Bimetallstellelement (31a, 31b) von einer flexiblen Haut (34) überzogen ist.

12. Folienextrusionsanlage (50) zur Herstellung einer Folie (20), mit
einem Blaskopf (4), der einen Austritt der Folie (20) bewirkt,
einer Kühleinheit (5) zur Kühlung der aus dem Blaskopf (4) austretenden Folie (20),
einer Dickenmessungseinheit (7) zur Messung der Foliendicke,
einer Elektronikeinheit (11), die insbesondere als Steuer- und/oder Regelungseinheit ausgebildet ist, wobei die Elektronikeinheit (11) in Signalverbindung mit der Kühleinheit (5) und der Dickenmessungseinheit (7) steht, um die Foliendicke (20) zu beeinflussen, einer Vorrichtung gemäß einem der Ansprüche I-II,
wobei aus der Kühleinheit (5) ein Kühlgasvolumenstrom (12) mit einer Kühlgastemperatur derart ausströmbar ist, dass die Folie (20) durch den Kühlgasvolumenstrom (12) anströmbar ist,
wobei Mittel vorgesehen sind, so dass gleichzeitig der Kühlgasvolumenstrom (12) und die Kühlgastemperatur einstellbar ist,
**dadurch gekennzeichnet,**
**dass** zumindest ein Ventilelement (31) in der Kühleinheit (5) angeordnet ist, wodurch der Kühlgasvolumenstrom (12) veränderbar ist,
und **dass** das Ventilelement (31) ein verbiegbares Bimetallstellelement (31 a, 31 b) ist, durch das mit Änderung der Kühlgastemperatur zusätzlich der Kühlgasvolumenstrom (12) durch Verringerung oder Vergrößerung eines des in der Kühleinheit (5) angeordneten Kühlgaskanalquerschnitts (33), durch den der Kühlgasvolumenstrom (12) leitbar ist, veränderbar ist,
wobei in der Kühleinheit (5) ein Heizelement (32) integriert ist, und wobei das Bimetallstellelement (31 a, 31 b) derart mit dem Heizelement (32) gekoppelt ist, dass über die Änderung der Kühlgastemperatur der um das Bimetallstellelement strömende Kühlgasvolumenstrom (12) gleichzeitig dafür sorgt, dass das Bimetallstellelement (31a, 31b) sich entsprechend verbiegt und/oder einstellt, wodurch der Kühlgasvolumenstrom (12) variiert werden kann.

13. Folienextrusionsanlage (50) nach Anspruch 12,
**dadurch gekennzeichnet,**
**dass** die Kühleinheit (5) am Blaskopf (4) integriert ist, wobei insbesondere die Folienextrusionsanlage (50) als Blasfolienextrusionsanlage (51) ausgebildet ist, insbesondere dass die Folienextrusionsanlage (50) als eine vertikal abwärts arbeitende Blasfolienextrusionsanlage (51) mit Wasserkühlung (53) ausgebildet ist.

14. Folienextrusionsanlage (50) nach Anspruch 12 oder 13,
**dadurch gekennzeichnet,**
**dass** die Folienextrusionsanlage (50) als Flachfolienextrusionsanlage (52) ausgebildet ist.

## Claims

1. Device for cooling a film (20), for a film extrusion system (50), having a cooling unit (5) from which a volumetric flow of cooling gas (12) having a cooling gas temperature is dischargeable in such a manner that the film (20) is impingeable by the volumetric flow of cooling gas (12),
wherein means are provided such that the volumetric flow of cooling gas (12) and the cooling gas temperature are simultaneously adjustable,
**characterized in**
**that** at least one valve element (31) is disposed in the cooling unit (5), on account of which the volumetric flow of cooling gas (12) is modifiable,
and **that** the valve element (31) is a bendable bimetallic control member (31a, 31b) by way of which, along with the modification of the cooling gas temperature, additionally the volumetric flow of cooling gas (12) is modifiable by way of a reduction or an enlargement of a cooling-gas duct cross section (33) which is disposed in the cooling unit (5) and through which the volumetric flow of cooling gas (12) is conductible,
wherein a heating element (32) is integrated in the cooling unit (5), and wherein the bimetallic control member (31a, 31b) is coupled to the heating element (32) in such a manner that, by way of the modification of the cooling gas temperature, the volumetric flow of cooling gas (12) flowing around the bimetallic control member simultaneously causes the bimetallic control member (31a, 31b) to correspondingly bend and/or adjust, on account of which the volumetric flow of cooling gas (12) can be varied.

2. Device according to Claim 1,
**characterized in**
**that** means are provided such that the volumetric flow of cooling gas (12) is controller or regulated in a self-acting manner, depending on the cooling gas temperature, or vice versa.

3. Device according to Claim 1 or 2,
**characterized in**
**that** at least one regulating element (30) is disposed in the cooling unit (5), wherein the valve element (31) and a heating element (32) are integrated in the regulating element (30), in order to simultaneously control and/or regulate the volumetric flow of cooling gas (12) and the cooling gas temperature.

4. Device according to one of the preceding claims,
**characterized in**
**that** the cooling unit (5) is configured as a cooling ring (5) which displays a multiplicity of regulating elements (30) on the circumference side of the cooling ring (5), or that the cooling unit (5) is configured as a rod-shaped cooling element (5) which displays a multiplicity of regulating elements (30) which are disposed in a linear manner beside one another.

5. Device according to Claim 3 or 4,
**characterised in**
**that** a drive device (40) for moving the cooling unit (5) and/or the regulating elements (30) is provided, in particular that the drive device (40) is a mechanical drive device (40).

6. Device according to Claim 5,
**characterized in**
**that** the cooling unit (5) and/or the regulating elements (30) are/is movable in a translatory manner along the film (20) and/or are/is movable to and fro and/or are/is reversible, wherein in particular the cooling unit (5) and/or the regulating elements (30) are/is movable about the tubular film (20) and/or are/is movable to and fro and/or are/is reversible, and wherein, in particular by way of the drive device (40), the cooling ring (5) and/or the regulating elements (30) are/is movable about a rotation axis (41) between 0 and 360°, preferably between 5 and 45°.

7. Device according to Claim 3 or 4,
**characterized in**
**that** a continuously modified electronic activation (60) for the regulating elements (30) is provided, on account of which electronic reversing of the regulating elements (30) is performable.

8. Device according to Claim 7,
**characterized in**
**that** the electronic activation (60) activates the regulating elements (30) based on a random generator principle, using a variable adjustment speed and/or a variable actuating variable and/or variable speed and/or constant speed, wherein in particular the electronic activation (60) considers a correction value in order to activate individual regulating elements (30) or groups of regulating elements (30), on account of which an artificial formation of thick places and/or thin places is producible on the film (20).

9. Device according to Claim 5 or 7,
**characterized in**
**that** the electronic activation (60) or the drive device (40) is connected by signal with a thickness measuring unit (7).

10. Device according to one of the preceding claims,
**characterized in**
**that** the valve element (31) is configured from at least two bimetallic control members (31a, 31b), wherein in particular each bimetallic control member (31a, 31b) displays a free, movable end (31c), wherein the free ends (31c) are disposed adjacent to one another and each bimetallic control member (31a, 31b) displays in each case one immovable fastening region, wherein the immovable fastening regions face away from one another.

11. Device according to Claim 1 or 10,
**characterized in**
**that** the bimetallic control member (31a, 31b) is covered by a flexible skin (34).

12. Film extrusion system (50) for manufacturing a film (20), having
a blowing die (4) which effects an exit of the film (20),
a cooling unit (5) for cooling the film (20) existing from the blowing die (4),
a thickness measuring unit (7) for measuring the film thickness,
an electronics unit (11) which, in particular, is configured as a control unit and/or regulating unit, wherein the electronics unit (11) is connected by signal with the cooling unit (5) and the thickness measuring unit (7), in order to influence the film thickness (20),
a device according to one of claims 1 to 11,
wherein from the cooling unit (5) a volumetric flow of cooling gas (12) having a cooling gas temperature is dischargeable in such a manner that the film (20) is impingeable by the volumetric flow of cooling gas (12),
wherein means are provided such that the volumetric flow of cooling gas (12) and the cooling gas temperature are simultaneously adjustable,
**characterized in**
**that** at least one valve element (31) is disposed in the cooling unit (5), on account of which the volumetric flow of cooling gas (12) is modifiable,
and **that** the valve element (31) is a bendable bimetallic control member (31a, 31b) by way of which, along with the modification of the cooling gas temperature, additionally the volumetric flow of cooling gas (12) is modifiable by way of a reduction or an enlargement of a cooling-gas duct cross section (33) which is disposed in the cooling unit (5) and through which the volumetric flow of cooling gas (12) is conductible,
wherein a heating element (32) is integrated in the cooling unit (5), and wherein the bimetallic control member (31a, 31b) is coupled to the heating element (32) in such a manner that, by way of the modification of the cooling gas temperature, the volumetric flow of cooling gas (12) flowing around the bimetallic control member simultaneously causes the bimetallic control member (31a, 31b) to correspondingly bend and/or adjust, on account of which the volumetric flow of cooling gas (12) can be varied.

13. Film extrusion system (50) according to Claim 12,
**characterized in**
**that** the cooling unit (5) is integrated on the blowing die (4), wherein in particular the film extrusion system (50) is configured as a blown film extrusion system (51), in particular that the film extrusion system (50) is a vertically downward operating blown film extrusion system (51) having water cooling (53).

14. Film extrusion system (50) according to Claim 12 or 13,
**characterized in**
**that** the film extrusion system (50) is configured as a flat film extrusion system (52).

## Revendications

1. Dispositif pour refroidir une feuille (20) pour une installation d'extrusion de feuilles (50), comprenant une unité de refroidissement (5) de laquelle peut être émis un flux volumique de gaz de refroidissement (12) ayant une température de gaz de refroidissement de telle sorte que la feuille (20) puisse être parcourue par le flux volumique de gaz de refroidissement (12),
des moyens étant prévus, de telle sorte que le flux volumique de gaz de refroidissement (12) et la température de gaz de refroidissement puissent être ajustés simultanément,
**caractérisé en ce**
**qu'**au moins un élément de soupape (31) est disposé dans l'unité de refroidissement (5), de sorte que le flux volumique de gaz de refroidissement (12) puisse être varié,
et en ce que l'élément de soupape (31) est un élément de commande bimétallique flexible (31a, 31b) qui permet, par variation de la température de gaz de refroidissement, de faire varier en outre le flux volumique de gaz de refroidissement (12) en réduisent ou en augmentant la section transversale de canal de gaz de refroidissement (33) disposée dans l'unité de refroidissement (5), à travers laquelle le flux volumique de gaz de refroidissement (12) peut être guidé,
un élément chauffant (32) étant intégré dans l'unité de refroidissement (5), et l'élément de commande bimétallique (31a, 31b) étant accouplé à l'élément chauffant (32) de telle sorte que par variation de la température de gaz de refroidissement, le flux volumique de gaz de refroidissement (12) s'écoulant autour de l'élément de commande bimétallique fasse en sorte simultanément que l'élément de commande bimétallique (31a, 31b) fléchisse et/ou, s'ajuste de marnière correspondante, de manière à pouvoir faire varier le flux volumique de gaz de refroidissement (12).

2. Dispositif selon la revendication 1,
**caractérisé en ce que**
des moyens sont prévus de telle sorte que le flux volumique de gaz de refroidissement (12) soit commande ou régulé automatiquement en fonction de la température de gaz de refroidissement ou inversement.

3. Dispositif selon la revendication 1 ou 2,
**caractérisé en ce**
**qu'**au moins un élément de régulation (30) est disposé dans l'unité de refroidissement (5), l'élément de soupape (31) et un élément chauffant (32) étant intégrés dans l'élément de régulation (3a), afin de commander et/ou de réguler simultanément le flux volumique de gaz de refroidissement (12) et la température de gaz de refroidissement.

4. Dispositif selon l'une quelconque des revendications précédentes,
**caractérisé en ce que**
l'unité de refroidissement (5) est réalisée sous forme de bague de refroidissement (5) qui présente une pluralité d'éléments de régulation (30) sur la périphérie de la bague de refroidissement (5), ou en ce que l'unité de refroidissement, (5) est réalisée sous forme d'élément de refroidissement en forme de barre (5) qui présente une pluralité d'éléments de régulation (30) qui sont disposés linéairement les uns à côté des autres.

5. Dispositif selon la revendication 3 ou 4,
**caractérisé en ce**
**qu'**un dispositif d'entraînement (40) est prévu pour déplacer l'unité de refroidissement (5) et/ou les éléments de régulation (30), en particulier en ce que le dispositif d'entraînement (40) est un dispositif d'entraînement mélanique (40).

6. Dispositif selon la revendication 5,
**caractérisé en ce que**
l'unité de refroidissement (5) et/ou les éléments de régulation (30) sont déplaçables en translation le long de la feuille (20) et/ou sont déplaçables d'avant en arrière et/ou sont réversibles, l'unité de refroidissement (5) et/ou les éléments de régulation (30) pouvant notamment être déplacés autour de la feuille tubulaire (20) et/ou pouvant être déplacés d'avant en arrière et/ou étant réversibles, et la bague de refroidissement (5) et/ou les éléments de régulation (30) étant notamment déplaçables par le dispositif d'entraînement (40) autour d'un axe de rotation (41) entre 0 et 360 degrés, de préférence entre 5 et 45 degrés.

7. Dispositif selon la revendication 3 ou 4,
**caractérisé en ce**
**qu'**une commande électronique à variation continue (60) est prévue pour les éléments de régulation (30), de sorte qu'une inversion électronique des éléments de régulation (30) puisse être effectuée.

8. Dispositif selon la revendication 7,
**caractérisé en ce que**
la commande électronique (60) commande les éléments de régulation (30) avec une vitesse de réglage variable et/ou avec une grandeur de commande variable et/ou avec une vitesse variable et/ou avec une vitesse constante en fonction d'un principe générateur de randomisation, la commande électronique (60) tenant compte notamment d'une valeur de correction afin de commander des éléments de régulation individuels (30) ou des groupes d'éléments de régulation (30) de manière à pouvoir produite une formation artificielle de zones épaisses et/ou de zones minces sur la feuille (20).

9. Dispositif selon la revendication 5 ou 7,
**caractérisé en ce que**
la commande électronique (60) ou le dispositif d'entraînement (40) est en liaison de signal avec une unité de mesure d'épaisseur (7).

10. Dispositif selon l'une quelconque des revendications précédentes,
**caractérisé en ce que**
l'élément de soupape (31) est réalisé à partir d'au moins deux éléments de commande bimétalliques (31a, 31b),
chaque élément de commande bimétallique (31a, 31b) présentant notamment une extrémité libre mobile (31c), les extrémités libres (31c) étant disposées en position adjacente l'une par rapport à l'autre et chaque élément de commande bimétallique (31a, 31b) présentant à chaque fois une région de fixation immobile, les régions de fixation immobiles étant opposées l'une à l'autre.

11. Dispositif selon la revendication 1 ou 10,
**caractérisé en ce que**
l'élément de commande bimétallique (31a, 31b) est revêtu d'une peau flexible (34).

12. Installation d'extrusion de feuilles (50) pour la fabrication d'une feuille (20), comprenant
une tête de soufflage (4) qui provoque la sortie de la feuille (20),
une unité de refroidissement (5) pour refroidir la feuille (20) sortant de la tête de soufflage (4),
une unité de mesure d'épaisseur (7) pour mesurer l'épaisseur de la feuille,
une unité électronique (11) qui est notamment réalisée sous forme d'unité de commande et/ou de régulation, l'unité électronique (11) étant en liaison de signal avec l'unité de refroidissement (5) et l'unité de mesure d'épaisseur (7) afin d'influencer l'épaisseur de la feuille (20),
un dispositif selon l'une quelconque des revendications 1 à 11,
un flux volumique de gaz de refroidissement (12) pouvant être émis hors de l'unité de refroidissement (5) à une température de gaz de refroidissement de telle sorte que la feuille (20) puisse être parcourue par le flux volumique de gaz de refroidissement (12),
des moyens étant prévus de telle sorte que le flux volumique de gaz de refroidissement (12) et la température de gaz de refroidissement puissent être ajustés simultanément,
**caractérisée en ce**
**qu'**au moins un élément de soupape (31) est disposé dans l'unité de refroidissement (5), de sorte que le flux volumique de gaz de refroidissement (12) puisse être varié,
et en ce que l'élément de soupape (31) est un élément de commande bimétallique flexible (31a, 31b) qui permet, par variation de la température de gaz de refroidissement, de faire varier en outre le flux volumique de gaz de refroidissement (12) en réduisant ou en augmentant la section transversale de canal de gaz de refroidissement (33) disposée dans l'unité de refroidissement (5), à travers laquelle le flux volumique de gaz de refroidissement (12) peut être guidé,
un élément chauffant (32) étant intégré dans l'unité de refroidissement (5), et l'élément de commande bimétallique (31a, 31b) étant accouplé à l'élément chauffant (32) de telle sorte que par variation de à température de gaz de refroidissement, le flux volumique de gaz de refroidissement (12) s'écoulant autour de l'élément de commande bimétallique fasse en sorte simultanément que l'élément de commande bimétallique (31a, 31b) fléchisse et/ou s'ajuste de manière correspondante, 1 de manière à pouvoir faire varier le flux volumique de gaz de refroidissement (12).

13. Installation d'extrusion de feuilles (50) selon la revendication 12,
**caractérisée en ce que**
l'unité de refroidissement (5) est intégrée au niveau de la tête de soufflage (4), l'installation d'extrusion de feuilles (50) étant notamment réalisée sous forme d'installation d'extrusion de feuilles par soufflage (51), notamment **en ce que** l'installation d'extrusion de feuilles (50) est réalisée sous forme d'installation d'extrusion de feuilles par soufflage (51) fonctionnant verticalement vers le bas avec un refroidissement à eau (53).

14. Installation d'extrusion de feuilles (50) selon la revendication 12 ou 13,
**caractérisée en ce que**
l'installation d'extrusion de feuilles (50) est réalisée sous forme d'installation d'extrusion de feuilles plate (52).
